# EUROPEAN PATENT APPLICATION

(11) **EP 4 297 296 A1**
(43) Date of publication of application: **27.12.2023**
(21) Application number: 22771816.0
(22) Date of filing: 18.03.2022
(51) Int. Cl.: H04B 10/2575, H04B 10/80, H01B 9/00, H01B 11/22, G02B 6/44

(54) **APPARATUS AND METHOD FOR PROVIDING SERVICE NETWORK IN WIRELESS COMMUNICATION SYSTEM**

(30) Priority: 19.03.2021 KR 20210036137
(71) Applicant: Samsung Electronics Co., Ltd., Suwon-si, Gyeonggi-do 16677 (KR)
(72) Inventor: KIM, Jinsu, Suwon-si, Gyeonggi-do 16677 (KR); KIM, Jisang, Suwon-si, Gyeonggi-do 16677 (KR); LEE, Chunsoo, Suwon-si, Gyeonggi-do 16677 (KR); JEONG, Soonin, Suwon-si, Gyeonggi-do 16677 (KR); CHOI, Jinchul, Suwon-si, Gyeonggi-do 16677 (KR)
(74) Representative: Gulde & Partner
(86) International application number: PCT/KR2022/003832
(87) International publication number: WO 2022/197150

(57) **Abstract**

Embodiments of the present disclosure comprise: a first communication circuit including a first transceiver and a first fiber optic transceiver for transmitting and receiving a signal in a first frequency band, and a second communication circuit including a second transceiver and a second fiber optic transceiver for transmitting and receiving a signal in a second frequency band, wherein the second communication circuit may receive information regarding the second frequency band, and transmit the information to the first communication circuit via the second fiber optic transceiver; the first communication circuit may receive the information via the first fiber optic transceiver, and transmit the information to a terminal; the first fiber optic transceiver may be connected to the second fiber optic transceiver; and a lowest frequency in the second frequency band may be higher than the highest frequency in the first frequency band. Other various embodiments may be possible.

## Description

### [Technical Field]

Various embodiments of the disclosure relate to a wireless communication system and to an apparatus and a method for providing a service network in a wireless communication system.

### [Background Art]

To meet the demand for wireless data traffic having increased since deployment of 4G communication systems, efforts have been made to develop an improved 5G or pre-5G communication system. For this reason, the 5G or pre-5G communication system is also called a "beyond 4G network" communication system or a "post LTE" system.

The 5G communication system is also implemented in high frequency (mmWave) bands (e.g., 28GHz or 39GHz bands) so as to accomplish higher data transfer rates.

As described above, in order to supply 5G communication to the home, electronic devices such as customer premises equipment (CPE) are being developed to receive 5G communication signals from repeaters and transmit 5G communication signals to the home.

### [Disclosure of Invention]

### [Technical Problem]

It may be difficult to receive signals in 5G bands indoors because 5G bands have smaller coverage than that in 4G communication due to the high-frequency characteristics thereof causing short radio wave arrival bands and because of the straightness of radio waves. In the case of Sub6, although it is possible to install electronic devices indoors by installing base stations densely to improve coverage and indoor transmission and/or reception environments, the straightness of millimeter bands such as a 28GHz are too high to improve indoor transmission and/or reception environments, so that the electronic devices are recommended to be installed outdoors. In addition, electronic devices supporting 5G may increase in volume and power consumption due to the addition of components and antennas to implement Sub6 and millimeter waves.

Various embodiments of the disclosure provide an electronic device capable of being installed to conform to the high-frequency (e.g., millimeter wave) characteristics in which the radio wave may be difficult to be transmitted and received indoors because it can hardly pass through objects due to high straightness thereof by separately disposing a communication module for processing a higher frequency band and a communication module for processing a lower frequency band, and a method therefor.

Various embodiments of the disclosure provide an apparatus and a method for providing stable 5G data transmission through a connection member by a wired connection between the separately disposed communication modules through the connection member.

### [Solution to Problem]

According to an embodiment of the disclosure, an electronic device may include a first communication circuit including a first transceiver and a first fiber optic transceiver for transmitting and receiving a signal in a first frequency band, and a second communication circuit including a second transceiver and a second fiber optic transceiver for transmitting and receiving a signal in a second frequency band, wherein the second communication circuit may receive information through the second frequency band and transmit the information to the first communication circuit through the second fiber optic transceiver, wherein the first communication circuit may receive the information through the first fiber optic transceiver and transmit the information to a terminal, wherein the first fiber optic transceiver may be connected to the second fiber optic transceiver, and wherein the lowest frequency in the second frequency band may be higher than the highest frequency in the first frequency band.

According to an embodiment of the disclosure, a method of an electronic device may include receiving, through a second transceiver, which is included in a second communication circuit and transmits and receives a signal in a second frequency band, information of the second frequency band, transmitting the information to a first communication circuit through a second fiber optic transceiver included in the second communication circuit, receiving the information through a first fiber optic transceiver, which is included in the first communication circuit and transmits and receives a signal in a first frequency band, and transmitting the information to a terminal through the first communication circuit, wherein the first fiber optic transceiver may be connected to the second fiber optic transceiver, and wherein the lowest frequency in the second frequency band may be higher than the highest frequency in the first frequency band.

### [Advantageous Effects of Invention]

According to an embodiment of the disclosure, a signal processing load of an electronic device may be reduced due to a short wavelength in a high frequency band by separately disposing a communication module for processing a higher frequency band and a communication module for processing a lower frequency band.

According to an embodiment of the disclosure, since separately disposed communication modules may be wire-connected using a photoelectric composite cable, an electronic device is able to provide stable 5G data transmission due to an optical cable included in the photoelectric composite cable, compared to the case where they are connected using a copper wire, thereby realizing higher transmission rates.

According to an embodiment of the disclosure, since separately disposed communication modules in an electronic device may be wire-connected through a photoelectric composite cable, it is possible to supply power to power supply devices included in the separately disposed communication modules through a copper wire included in the photoelectric composite cable, compared to the case where they are connected through power over ethernet (PoE), enabling miniaturization of the electronic device.

Advantageous effects obtainable from the disclosure may not be limited to the above mentioned effects, and other effects which are not mentioned may be clearly understood, through the following descriptions, by those skilled in the art to which the disclosure pertains.

### [Brief Description of Drawings]

FIG. 1 is a block diagram of an electronic device in a network environment according to an embodiment of the disclosure.
FIG. 2 illustrates a network environment according to an embodiment of the disclosure.
FIG. 3 illustrates an implementation example of a first communication circuit and a second communication circuit according to an embodiment of the disclosure.
FIG. 4 illustrates another implementation example of a first communication circuit and a second communication circuit according to an embodiment of the disclosure.
FIG. 5 illustrates an implementation example of a second communication circuit according to an embodiment of the disclosure.
FIG. 6 illustrates another implementation example of a first communication circuit and a second communication circuit according to an embodiment of the disclosure.
FIG. 7 is a flowchart illustrating communication according to an embodiment of the disclosure.

### [Mode for Carrying out the Invention]

The terms used in the disclosure are only used to describe specific embodiments, and are not intended to limit the disclosure. A singular expression may include a plural expression unless they are definitely different in a context. Unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software. In addition, terms referring to network entities, terms referring to device elements, and the like are illustratively used for the sake of descriptive convenience. Therefore, the disclosure is not limited by the terms as used below, and other terms referring to subjects having equivalent technical meanings may be used.

In the description below, terms referring to electronic device components (e.g., substrate, plate, printed circuit board (PCB), flexible PCB (FPCB), module, antenna, antenna element, circuit, processor, chip, element, and device), terms referring to component shapes (e.g., tuning member, tuning structure, tuning structural body, structure, support, contact, protrusion, and opening), terms referring to connections between structures (e.g., connection part, contact part, support part, contact structure, conductive member, and assembly), terms referring to circuits (e.g., transmission line, PCB, FPCB, signal line, feeding line, data line, RF signal line, antenna cable, RF path, RF module, and RF circuit), and the like are illustratively used for the sake of descriptive convenience. Therefore, the disclosure is not limited by the terms as used below, and other terms referring to subjects having equivalent technical meanings may be used. Furthermore, as used below, the terms "unit", "device", "member", "body", and the like may indicate at least one shape structure or may indicate a unit for processing a function.

As used in an embodiment of the disclosure, such expressions as "a first" or "a second" may modify various elements in an embodiment, but do not limit the corresponding elements. For example, these expressions do not limit the order and/or the importance of the corresponding elements. These expressions may be used to distinguish between one element and any other element. For example, a first user device and a second user device are all user devices and indicate different user devices. For example, a first element may be termed a second element, and similarly, a second element may be termed a first element without departing from the scope of various embodiments of the disclosure.

The terms used in an embodiment of the disclosure are only used to describe a specific embodiment, and are not intended to limit an embodiment of the disclosure. A singular expression may include a plural expression unless they are definitely different in a context.

In the disclosure, embodiments will be described using terms employed in some communication standards (e.g., the 3rd generation partnership project (3GPP) and European telecommunication standards institute (ETSI)), but they are only for the sake of illustration. The embodiments of the disclosure may also be easily applied to other communication systems through modifications.

As used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

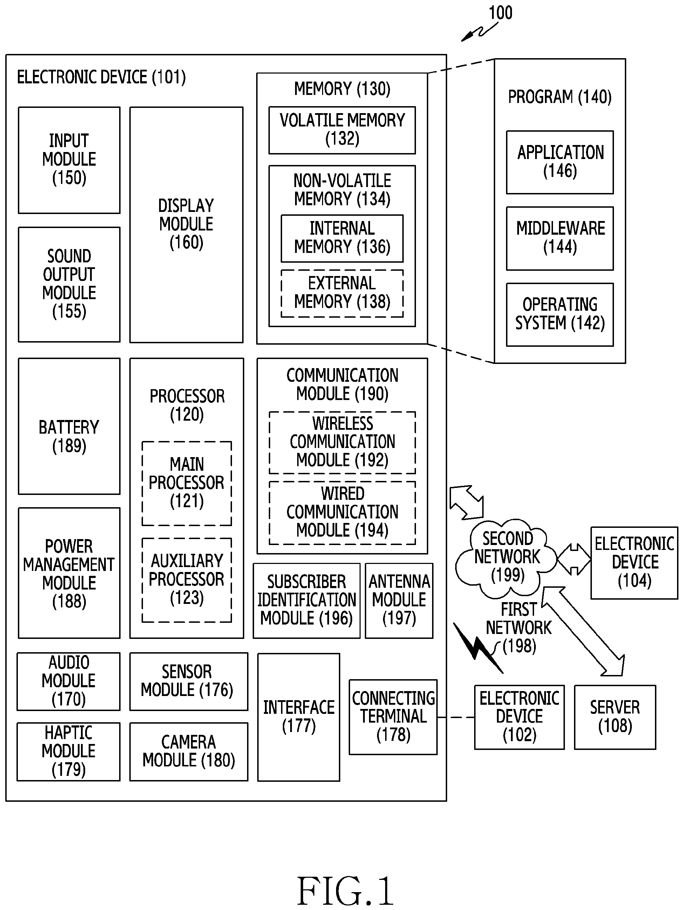

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 250, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least a part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, in case that the electronic device 1010 includes the main processor 121 and the auxiliary processor 123, the auxiliary processor 123 may be configured to consume less power than the main processor 121, or to be specific to a specified function. The auxiliary processor 123 may be implemented separately from, or as a part of the main processor 121.

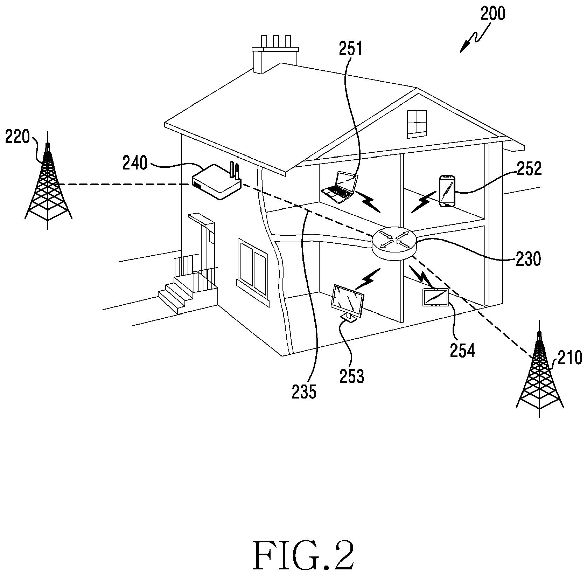

FIG. 2 illustrates a network environment 200 according to an embodiment of the disclosure. The network environment 200 may include a first base station 210, a second base station 220, an electronic device (CPE), and/or client devices 251, 252, 253, and 254 providing a radio access network for Internet connection. The electronic device (CPE) may be a device for seamless Internet connection of the client devices 251, 252, 253, and 254. In an embodiment, the electronic device (CPE) may include a first electronic device and a second electronic device. The first electronic device may include a first communication circuit 230. The second electronic device may include a second communication circuit 240. The first electronic device and the second electronic device may be connected using a connection member. According to an embodiment, the connection member 235 may include a photoelectric composite cable, and the photoelectric composite cable may include a copper wire for transmitting power and an optical cable for transmitting an optical signal.

Referring to FIG. 2, the first base station 210 and/or the second base station 220 may be a network infrastructure that provides wireless access to electronic devices (e.g., CPE, terminals, APs, etc.). The first base station 210 and/or the second base station 220 may have coverage including a certain geographical area based on a distance over which signals are able to be transmitted. Hereinafter, the term "coverage" used may refer to a service coverage area of the first base station 210 and/or the second base station 220. The first base station 210 and/or the second base station 220 may cover one cell or multiple cells. Here, the multiple cells may be distinguished by a supported frequency and a covered sector area. The first base station 210 and/or the second base station 220 may be referred to as "access points (APs)", "eNodeBs (eNBs)", "5th generation nodes (5G nodes)", "5G NodeBs (NBs)", "next-generation node Bs (gNBs)", "wireless points", "transmission/reception points (TRPs)", "distributed units (DUs)", "radio units (RUs)", "remote radio heads (RRHs)", or other terms having technical meanings equivalent thereto, as well as base stations.

According to an embodiment, the first base station 210 and the second base station 220 may be associated with different communication systems.

Hereinafter, for the convenience of description, a wireless network provided by the first base station 210 will be referred to as a first cellular network, and a wireless network provided by the second base station will be referred to as a second cellular network. For example, the second cellular network is a mobile network for providing services different from those of the first cellular network, and is assumed to be provided by a 5G communication system. In the disclosure, the 5G communication system may indicate a system distinct from a 4G communication system (e.g., long-term evolution (LTE), LTE-advanced (LTE-A), or WiMAX), a 3G communication system (e.g., wideband code division multiple access (WCDMA)), or a 2G communication system (e.g., global system for mobile communications (GSM) or code division multiple access (CDMA)).

According to an embodiment, the communication system provided through the first base station 210 may be a 5G communication system. For example, the first base station 210 may provide cellular networks of Pre-5G (5th generation), v5G, or 3GPP new radio (NR). As another example, the first cellular network may include a communication system using sub-6 (less than 6GHz). According to another embodiment, the communication system provided through the first base station 210 may be a 4G communication system. For example, the first base station 210 may provide a cellular network based on LTE communication.

According to an embodiment, the communication system provided through the second base station 220 may be a 5G communication system. For example, the second base station may provide cellular networks of Pre-5G (5th generation), v5G, or 3GPP (new radio) NR. As another example, the second cellular network may be a 5G communication system and provided in a higher frequency band than the first cellular network. For example, the second cellular network may include a communication system using millimeter waves (e.g., 26GHz, 28GHz, 38GHz, or 60GHz or more). As another example, the second cellular network may be associated with a beamforming system for operating beams formed due to high frequencies. The embodiments of the disclosure will be described on the assumption that the first cellular network is a communication system using sub-6 (less than 6GHz) or an LTE communication system and that the second cellular network is a 5G communication system using millimeter waves (e.g., 26GHz, 28GHz, 38GHz, or 60GHz). However, the embodiments of the disclosure may also be applied to other communication systems.

According to an embodiment, the first communication circuit 230 may be utilized for communication with the client devices 251, 252, 253, and 254 in the network environment 200. The first communication circuit 230 is a device for establishing an independent network with at least one of the client devices 251, 252, 253, and 254 and may provide a wired connection such as Ethernet or a wireless connection such as Wi-Fi the respective client devices. In an embodiment, the first communication circuit 230 may form a backhaul link to provide Internet access to at least one of the client devices 251, 252, 253, and 254. The backhaul link may refer to an access link formed by the first communication circuit 230 to configure an Internet connection. In an embodiment, the first communication circuit 230 may form a backhaul link providing access to a cellular network. For example, the first communication circuit 230 may include a modem supporting 5G so as to communicate with the first base station 210. As another example, the first communication circuit 230 may include a modem supporting LTE so as to communicate with the first base station 210. As another example, the first communication circuit 230 may be referred to as a CPE or a 5G CPE. For example, the first communication circuit 230 may be referred to as a 5G CPE indoor unit (IDU). As another example, the first communication circuit 230 may access the second cellular network through the second communication circuit 240. As another example, the first communication circuit 230 may provide services to the client devices 251, 252, 253, and 254 through a communication scheme different from 5G and LTE.

According to an embodiment, the second communication circuit 240 may be equipment for providing a service network. The second communication circuit 240 may be connected to the first communication circuit 230 to provide a network in a specific wireless access method (e.g., NR as a 5G communication system) to the first communication circuit 230. In an embodiment, the second communication circuit 240 may include a communication interface providing a corresponding wireless access technology. The second communication circuit 240 may be referred to as an outdoor unit (ODU). For example, the second communication circuit 240 may be an outdoor unit (ODU) including a millimeter wave module and may support a frequency band in about 20GHz or more (e.g., millimeter waves). According to an embodiment, the second communication circuit 240 may provide a cellular network related to the millimeter wave characteristics. For example, the second communication circuit 240 may perform communication using beamforming. For example, the client device 251 may communicate with the second base station 220 via the first communication circuit 230 and the second communication circuit 240.

According to an embodiment, the client devices 251, 252, 253, and 254 are electronic devices and may perform wired or wireless communication. For example, the client devices 251, 252, 253 or 254 may include at least one of cellular phones, smartphones, computers, tablet PCs, mobile phones, video phones, e-book readers, desktop PCs, laptop PCs, netbook computers, workstations, servers, PDAs, portable multimedia players (PMPs), MP3 players, medical devices, cameras, wearable devices, or multimedia systems capable of executing a communication function. In addition, the types of the client devices 251, 252, 253, and 254 are not limited to the above examples. At least one of the client devices 251, 252, 253, and 254 may be a user device used by a user. For example, the client device 251 may be a laptop PC supporting an Ethernet connection. As another example, at least one of the client devices 251, 252, 253, and 254 may be operated without user intervention. For example, the client device 253 may be a device that performs machine-type communication (MTC) and may not be carried by the user. The client devices 251, 252, 253, and 254 may be referred to as "user equipment (UE)", "mobile stations", "subscriber stations", "remote terminals", "wireless terminals", "electronic devices", "vehicle terminals", "user devices", or other terms having technical meanings equivalent thereto, as well as terminals.

According to an embodiment, since the high straightness of the millimeter wave makes it difficult to pass through objects in the 5G communication system, there is difficulty in indoor transmission and reception, so the second communication circuit 240 may be located outdoors, unlike the client devices 251, 252, 253, and 254 located indoors. According to an embodiment, the second communication circuit 240 may be located outdoors to provide seamless wireless access, whereas the first communication circuit 230 may be located indoors to maintain seamless communication with the client devices 251, 252, 253, and 254. Since the first communication circuit 230 and the second communication circuit 240 have a physical distance therebetween, the two devices may be connected using a connection member 235.

According to an embodiment, the connection between the first communication circuit 230 and the second communication circuit 240 through the connection member 235 may be a wired connection. For example, the first communication circuit 230 and the second communication circuit 240 may be connected by a photoelectric composite cable. For example, the first communication circuit 230 and the second communication circuit 240 may be connected by a photoelectric composite cable including a copper wire for transmitting electric power and an optical cable for transmitting an optical signal.

Millimeter waves (e.g., 26GHz, 28GHz, 38GHz, or 60GHz) in the 5G communication system may have relatively short wavelengths. Since the millimeter wave signal does not easily pass through an outer wall due to high path loss, the second communication circuit 240 may be located outdoors, unlike the client devices 251, 252, 253, and 254 located indoors. According to an embodiment of the disclosure, millimeter waves may be received using the second communication circuit 240 located outdoors. Accordingly, the electronic device according to an embodiment of the disclosure may reduce the area and loss, compared to existing electronic devices according to comparative examples, and may solve an environment in which heat generation and system shutdown may occur due to large power consumption. In addition, the electronic device may be installed at a location suitable for high frequency (e.g., millimeter wave) characteristics. According to an embodiment, the connection member 235 may include a photoelectric composite cable, and an optical cable included in the photoelectric composite cable may be used for connection between the first communication circuit 230 and the second communication circuit 240, thereby stably transmitting data and realizing high transmission rates. In addition, since power is supplied from the first communication circuit 230 located indoors, it is possible to miniaturize the electronic device and reduce the cost, compared to an existing power-over-ethernet (PoE) system. For example, the electronic device may be a CPE or a 5G CPE.

According to various embodiments of the disclosure, the first communication circuit 230 and the second communication circuit 240 may be disposed separately. This is due to the fact that as the frequency increases, it may be difficult to transmit and receive a radio wave indoors due to high straightness, which may be a big burden in processing signals. According to an embodiment, a signal in a first frequency band may be transmitted and received through the first communication circuit 230 and a signal in a second frequency band may be transmitted and received through the second communication circuit 240. The first communication circuit 230 and the second communication circuit 240 may be referred to as CPE or 5G CPE. For example, the first frequency band may include LTE bands, sub-6 (less than 6GHz), or sub-7 (less than 7GHz). The second frequency band may include millimeter wave bands (e.g., 26GHz, 28GHz, 38GHz, and 60GHz) or a band exceeding 6GHz.

According to an embodiment, the lowest frequency in the second frequency band may be greater than the highest frequency in the first frequency band.

According to an embodiment, a module for a high frequency band may be installed outdoors in order to process a high-frequency (e.g., millimeter wave) signal having a short wavelength with relatively less loss. For example, a wired communication line (e.g., a photoelectric composite cable), which is the connection member 235, may be used to receive a signal through a high frequency band module outdoors and to transmit the same to the indoor user. Signals received through the wired communication line may be transmitted to the client devices 251, 252, 253, and 254.

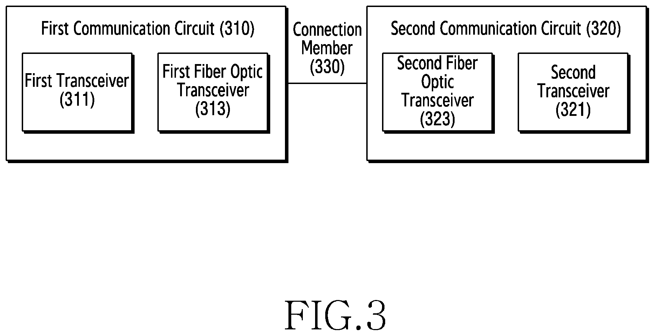

FIG. 3 illustrates an implementation example of a first communication circuit 310 and a second communication circuit 320 according to an embodiment of the disclosure.

Referring to FIG. 3, the electronic device (CPE) may include a first electronic device and a second electronic device, and the first electronic device may include a first communication circuit 310, and the second electronic device may include a second communication circuit 320. The first communication circuit 310 may be referred to as CPE or 5G CPE. For example, the first communication circuit 310 may be referred to as a 5G CPE indoor unit (IDU). In addition, the first communication circuit 310 may be utilized to provide services to the client devices 251, 252, 253, and 254 in the network environment 200, and may be utilized to perform communication with the first base station 210. The second communication circuit 320 may be referred to as an outdoor unit (ODU). For example, the second communication circuit 240 may be an outdoor unit (ODU) including a millimeter wave module and may support a frequency band in about 20GHz or more (e.g., millimeter waves). As another example, the second communication circuit 320 may be utilized to perform communication with the second base station 220.

According to an embodiment, a signal in a first frequency band may be transmitted and received through the first communication circuit 310 and a signal in a second frequency band may be transmitted and received through the second communication circuit 320. For example, the first frequency band may include a Wi-Fi band, an LTE band, sub-6 (less than 6GHz), or sub-7 (less than 7GHz). As another example, the second frequency band may include a millimeter wave band (e.g., 26GHz, 28GHz, 38GHz, or 60GHz) or a band exceeding 6GHz.

According to an embodiment of the disclosure, the second communication circuit 320 may be located outdoors because the second frequency band does not easily pass through the outer wall due to high path loss. As another example, the second communication circuit 320 may be located outdoors to provide a seamless wireless access, whereas the first communication circuit 310 may be located indoors to maintain seamless connections with the client devices 251, 252, 253, and 254. Since the first communication circuit 310 and the second communication circuit 320 have a physical distance therebetween, the two devices may be connected using a connection member 330. According to an embodiment, the connection member 330 may include a photoelectric composite cable, and the photoelectric composite cable may include a copper wire for transmitting power and an optical cable for transmitting an optical signal.

According to an embodiment, the first communication circuit 310 may include a first transceiver 311. The first transceiver 311 may communicate with the first base station 210. According to an embodiment, a wireless network provided by the first base station 210 may be referred to as a first cellular network. For example, the first base station 210 may provide a cellular network in a first frequency band.

According to an embodiment, the first transceiver 311 may convert a signal in the first frequency band received from the first base station 210 into a digital signal, and the digital signal may be converted into digital data that is transmitted to the client devices 251, 252, 253, and 254 in the network environment 200, and the client devices 251, 252, 253, and 254 may receive information included in the signal in the first frequency band, which is the digital data.

According to an embodiment, the first communication circuit 310 may include a first fiber optic transceiver 313. According to an embodiment, the connection between the first communication circuit 310 and the second communication circuit 320 may be a wired connection through the connection member 330. For example, the first communication circuit 310 and the second communication circuit 320 may be connected by the connection member 330 through a first fiber optic transceiver 313 and a second fiber optic transceiver 323, respectively. For example, the first communication circuit 310 and the second communication circuit 320 may be connected by the connection member 330 including a copper wire for transmitting power and an optical cable for transmitting an optical signal through the first fiber optic transceiver 313 and the second fiber optic transceiver 323.

In an embodiment, the second fiber optic transceiver 323 may convert a digital signal received from the second transceiver 321 into an optical signal and transmit the optical signal to the first communication circuit 310 through the connection member 330. As another example, the first fiber optic transceiver 313 may receive an optical signal from the second communication circuit 320 through the connection member 330 and convert the optical signal back into a digital signal to provide a service to at least one of the client devices 251, 252, 253, and 254. For example, a signal in a second frequency band received from the second base station 220 may be converted into a digital signal by a module included in the second transceiver 321 and transmitted to the second fiber optic transceiver 323. In addition, the digital signal may be converted into an optical signal by the second fiber optic transceiver 323. In addition, the optical signal may be transmitted to the first fiber optic transceiver 313 through the second fiber optic transceiver. In addition, the first fiber optic transceiver 313 may convert the optical signal back into a digital signal and provide information included in the signal in the second frequency band to at least one of the client devices 251, 252, 253, and 254.

According to an embodiment, the second communication circuit 320 may include a second transceiver 321. The second transceiver 321 may communicate with the second base station 220. According to an embodiment, a wireless network provided by the second base station 220 may be referred to as a second cellular network. For example, the second base station 220 may provide a cellular network in the second frequency band.

According to an embodiment, the second transceiver 321 may convert the signal in the second frequency band received from the second base station 220 into a digital signal, and the digital signal may be transmitted to the second fiber optic transceiver 323.

According to an embodiment, the second communication circuit 320 may include a second fiber optic transceiver 323. According to an embodiment, the first communication circuit 310 and the second communication circuit 320 may be connected by the connection member 330 including a copper wire for transmitting power and an optical cable for transmitting an optical signal through the first fiber optic transceiver 313 and the second fiber optic transceiver 323.

According to an embodiment, the second fiber optic transceiver 323 may convert the digital signal received from the second transceiver 321 into an optical signal and transmit the same to the first communication circuit 310 through the connection member 330. For example, the signal in the second frequency band received from the second base station 220 may be converted into a digital signal by a module included in the second transceiver 321 and transmitted to the second fiber optic transceiver 323. In addition, the digital signal may be converted into an optical signal by the second fiber optic transceiver 323. In addition, the optical signal may be transmitted to the first fiber optic transceiver 313 through the second fiber optic transceiver 323.

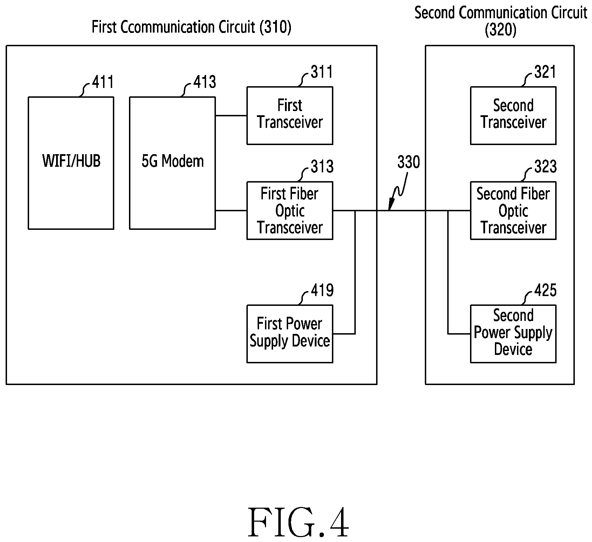

FIG. 4 illustrates another implementation example of a first communication circuit 310 and a second communication circuit 320 for communication according to an embodiment of the disclosure.

An electronic device (CPE) may include a first electronic device and a second electronic device, and the first electronic device may include a first communication circuit 310, and the second electronic device may include a second communication circuit 320.

According to an embodiment, a signal in a first frequency band may be transmitted and received through the first communication circuit 310, and a signal in a second frequency band may be transmitted and received through the second communication circuit 320. For example, the first frequency band may include a Wi-Fi band, an LTE band, sub-6 (less than 6GHz), or sub-7 (less than 7GHz). As another example, the second frequency band may include a millimeter wave band (e.g., 26GHz, 28GHz, 38GHz, or 60GHz) or a band exceeding 6GHz.

According to an embodiment of the disclosure, the second communication circuit 320 may be located outdoors because the second frequency band does not easily pass through the outer wall due to high path loss. As another example, the second communication circuit 320 may be located outdoors to provide a seamless wireless access, whereas the first communication circuit 310 may be located indoors to maintain seamless connections with the client devices 251, 252, 253, and 254. Since the first communication circuit 310 and the second communication circuit 320 have a physical distance therebetween, the two devices may be connected using a connection member 330. According to an embodiment, the connection member 330 may include a photoelectric composite cable, and the photoelectric composite cable may include a copper wire for transmitting power and an optical cable for transmitting an optical signal.

According to an embodiment, the first communication circuit 310 may include a Wi-Fi/hub 411, a 5G modem 413, a first transceiver 311, a first fiber optic transceiver 313, and/or a first power supply device 419.

According to an embodiment, the first communication circuit 310 may include a Wi-Fi/hub 411. The Wi-Fi/hub 411 may be utilized for communication with the client devices 251, 252, 253, and 254 in the network environment 200. For example, the Wi-Fi/hub 411 may be utilized to provide information included in a signal in the first frequency band to the client devices 251, 252, 253, and 254 in the network environment 200. For example, the Wi-Fi/hub 411 may receive digital data including information including a signal in the first frequency band from the 5G modem 413. In addition, the Wi-Fi/hub 411 may provide the received digital data to the client devices 251, 252, 253, and 254 in the network environment 200. According to another embodiment, the Wi-Fi/hub 411 will be utilized to provide information included in a signal in the second frequency band to the client devices 251, 252, 253, and 254 in the network environment 200. For example, the Wi-Fi/hub 411 may receive digital data including information including signals in the second frequency band from the 5G modem 413. In addition, the Wi-Fi/hub 411 may provide the received digital data to the client devices 251, 252, 253, and 254 in the network environment 200.

According to an embodiment, the first communication circuit 310 may include a 5G modem 413. The 5G modem 413 may be utilized to communicate with base stations. For example, the 5G modem 413 may be utilized to communicate with the first base station 210 that transmits and receives signals in the first frequency band. For example, the 5G modem 413 may be utilized to convert a digital signal received from the first transceiver 311 into digital data in order to communicate with the first base station 210. As another example, the 5G modem 413 may be utilized to communicate with the second base station 220 that transmits and receives signals in the second frequency band. For example, the 5G modem 413 may be utilized to convert a digital signal received from the first fiber optic transceiver 313 into digital data in order to communicate with the second base station 220.

According to an embodiment, the first communication circuit 310 may include a first power supply device 419. The first power supply device 419 may supply power. For example, the first power supply device 419 may supply power such that the first communication circuit 310 may use the power. As another example, the first power supply device 419 may supply power such that the second communication circuit 320 may use the power. For example, the first power supply device 419 may supply power through the connection member 330 such that the second communication circuit 320 may use the power. For example, the first power supply device 419 may supply power to the second power supply device 425 through a copper wire included in the connection member 330 such that the second communication circuit 320 may use the power through the second power supply device 425.

According to an embodiment, the second communication circuit 320 may include a second transceiver 321, a second fiber optic transceiver 323, and a second power supply device 425.

According to an embodiment, the second communication circuit 320 may include a second power supply device 425. The second power supply device 425 may supply power. For example, the second power supply device 425 may supply power such that the second communication circuit 320 may use the power. For example, the second power supply device 425 may receive power from the first power supply device 419 included in the first communication circuit 310 through the connection member 330 to supply power such that the second communication circuit 320 may use the power. For example, the second power supply device 425 may receive power from the first power supply device 419 included in the first communication circuit 310 through a copper wire that transmits power of the connection member 330 and supply power such that the second communication circuit 320 may use the power.

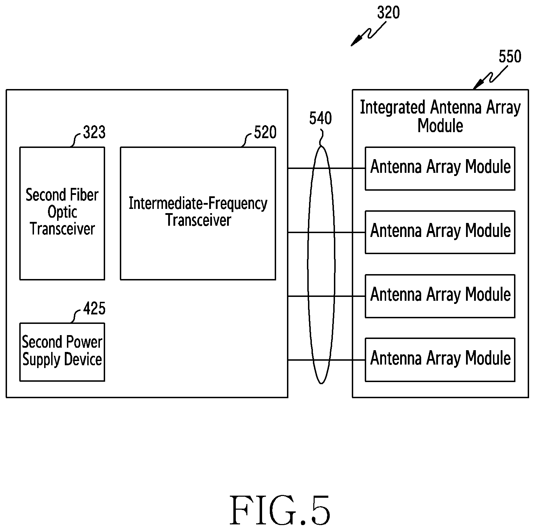

FIG. 5 illustrates an implementation example of a second communication circuit 320 for communication according to an embodiment of the disclosure.

According to an embodiment, signals in the second frequency band may be transmitted and received through the second communication circuit 320. For example, the second frequency band may include a millimeter wave band (e.g., 26GHz, 28GHz, 38GHz, or 60 GHz) or a band exceeding 6 GHz.

Referring to FIG. 5, the second communication circuit 320 may include a second fiber optic transceiver 323, a second power supply device 425, an intermediate-frequency transceiver 520, a conductive connection member 540, and/or an integrated antenna array module 550.

According to an embodiment, the second fiber optic transceiver 323 may convert a received signal. For example, the second fiber optic transceiver 323 may convert a digital signal received from the intermediate-frequency transceiver 520 into an optical signal. For example, the fiber optic transceiver 510 may convert a baseband signal, which is a digital signal received from the intermediate-frequency transceiver 520, into an optical signal in order for the first communication circuit 310 to communicate with the second base station 220.

According to an embodiment, the second communication circuit 320 may include an intermediate-frequency transceiver 520. According to an embodiment, the intermediate-frequency transceiver 520 may convert a received signal. For example, the intermediate-frequency transceiver 520 may convert an intermediate-frequency (IF) signal received from the integrated antenna array module 550 into a digital signal. For example, the intermediate-frequency transceiver 520 may receive the intermediate-frequency signal received from the integrated antenna array module 550 through a conductive connection member 540 and may convert the same into a baseband signal in order for the first communication circuit 310 to communicate with the second base station 220. In addition, the intermediate-frequency transceiver 520 may transmit the converted baseband signal to the fiber optic transceiver 510.

According to an embodiment, the second communication circuit 320 may include a conductive connection member 540. The conductive connection member 540 may be used for signal transmission. For example, the conductive connection member 540 may transmit a signal in the second frequency band received by the integrated antenna array module 550 to the intermediate-frequency transceiver 520. In addition, the conductive connection member 540 may transfer the signal received by the intermediate-frequency transceiver 520 to the integrated antenna array module 550.

According to an embodiment, the second communication circuit 320 may include an integrated antenna array module 550. The integrated antenna array module 550 may transmit and/or receive signals. For example, the integrated antenna array module 550 may communicate with the second base station 220. According to an embodiment, a wireless network provided by the second base station may be referred to as a second cellular network. For example, a communication system provided through the second base station 220 may be a 5G communication system, and the integrated antenna array module 550 may communicate with the second base station 220 providing the 5G communication system. For example, the second cellular network, as a 5G communication system, may be provided in a higher frequency band than the first cellular network, and the integrated antenna array module 550 may communicate with the second base station 220 providing the second cellular network. For example, the integrated antenna array module 550 may be associated with a communication system providing a second cellular network in millimeter wave (e.g., 26GHz, 28GHz, 38GHz, or 60GHz) bands.

According to an embodiment, the integrated antenna array module 550 may include at least one antenna array module and a wireless communication circuit (e.g., RFIC). At least one antenna array module may include, for example, a plurality of antennas. The wireless communication circuit may be electrically connected to at least one antenna array module. The wireless communication circuit may convert, for example, a signal in the second frequency range received by the at least one antenna array module and transmit the converted signal to the intermediate-frequency transceiver 520. For example, the wireless communication circuit may convert an RF signal in the millimeter wave band into an intermediate-frequency signal and transmit the converted intermediate-frequency signal to the intermediate-frequency transceiver 520. As another example, the wireless communication circuit may convert an intermediate-frequency signal received from the intermediate-frequency transceiver 520 into a signal in the second frequency range and transmit the converted signal to at least one antenna array module. For example, the wireless communication circuit may convert an intermediate-frequency signal received from the intermediate-frequency transceiver 520 into an RF signal in the millimeter wave band and transmit the converted RF signal to at least one antenna array module.

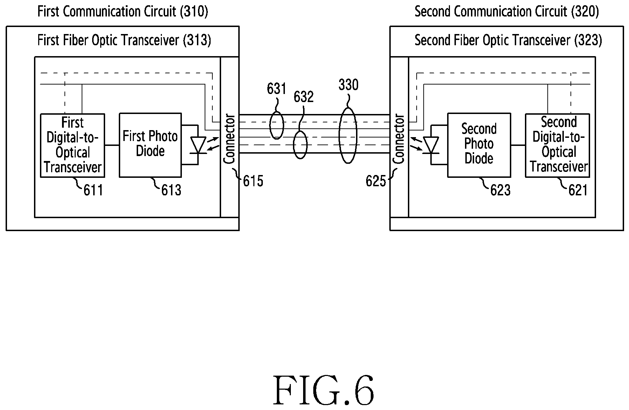

FIG. 6 illustrates an implementation example of a connection member 330, and a first fiber optic transceiver 313 and a second fiber optic transceiver 323 included in a first communication circuit 310 and a second communication circuit 320 for communication according to an embodiment of the disclosure.

An electronic device (CPE) may include a first electronic device and a second electronic device, and the first electronic device may include a first communication circuit 310, and the second electronic device may include a second communication circuit 320.

According to an embodiment, a signal in a first frequency band may be transmitted and received through the first communication circuit 310, and a signal in a second frequency band may be transmitted and received through the second communication circuit 320. For example, the first frequency band may include a Wi-Fi band, an LTE band, sub-6 (less than 6GHz), or sub-7 (less than 7GHz). The second frequency band may include a millimeter wave band (e.g., 26GHz, 28GHz, 38GHz, or 60GHz) or a band exceeding 6GHz.

According to an embodiment of the disclosure, the second communication circuit 320 may be located outdoors because the second frequency band does not easily pass through the outer wall due to high path loss. As another example, the second communication circuit 320 may be located outdoors to provide a seamless wireless access, whereas the first communication circuit 310 may be located indoors to maintain seamless connections with the client devices 251, 252, 253, and 254. Since the first communication circuit 310 and the second communication circuit 320 have a physical distance therebetween, the two devices may be connected using a connection member 330. According to an embodiment, the connection member 330 may include a photoelectric composite cable, and the photoelectric composite cable may include a copper wire for transmitting power and an optical cable for transmitting an optical signal.

According to an embodiment, the first communication circuit 310 may include a first fiber optic transceiver 313, and the first fiber optic transceiver 313 may include a first digital-to-optical transceiver 611 or a first photo diode 613.

In an embodiment, the first digital-to-optical transceiver 611 may convert a signal. For example, the first digital-to-optical transceiver 611 may convert a digital signal into an optical signal. For example, the first digital-to-optical transceiver 611 may convert a digital signal received from the 5G modem 413 into an optical signal in order for the first communication circuit 310 to perform optical signal communication with the second communication circuit 320 through an optical cable 632 included in the connection member 330.

According to an embodiment, the first photo diode 613 may convert a signal. For example, the first photo diode 613 may convert an optical signal into a digital signal. For example, the first photo diode 613 may convert an optical signal received from the second communication circuit 320 into a digital signal in order to transmit a digital signal to the 5G modem 413.

According to an embodiment, the second communication circuit 320 may include a second fiber optic transceiver 323, and the second fiber optic transceiver 323 may be a second digital-to-optical transceiver 621 or a second photo diode 623.

In an embodiment, the second digital-to-optical transceiver 621 may convert a signal. For example, the second digital-to-optical transceiver 621 may convert a digital signal into an optical signal. For example, the second digital-to-optical transceiver 621 may convert a digital signal received from the intermediate-frequency transceiver 520 into an optical signal in order for the second communication circuit 320 to perform communication with the first communication circuit 310 through the optical cable 632 included in the connection member 330.

According to an embodiment, the second photo diode 623 may convert a signal. For example, the second photo diode 623 may convert an optical signal into a digital signal. For example, the second photo diode 623 may convert an optical signal received from the first communication circuit 310 into a digital signal in order to transmit a digital signal to the intermediate-frequency transceiver 520.

According to an embodiment, the connection member 330 may include a copper wire 631 or an optical cable 632. For example, the photoelectric composite cable 630 may include a copper wire 631 for transmitting power or an optical cable 632 for transmitting an optical signal. For example, the photoelectric composite cable 630 may transfer power supplied from the first communication circuit 310 to the second communication circuit 320 through a copper wire 631 for transmitting power, thereby supplying power to the second communication circuit 320, and may enable the first communication circuit 310 and the second communication circuit 320 to transmit and receive signals in the second frequency band through the optical cable 632 for transmitting an optical signal.

According to an embodiment, the first communication circuit 310 may include a first connector 615, and the second communication circuit 320 may include a second connector 625. The first connector and the second connector may enable the connection member 330 to be electrically connected with the first communication circuit 310 and the second communication circuit 320.

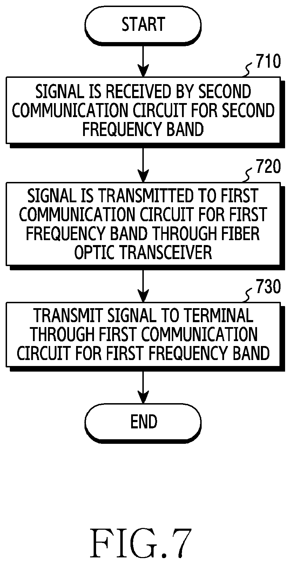

FIG. 7 shows a flowchart for communication according to an embodiment of the disclosure. According to an embodiment, a flowchart for communication enabling the first communication circuit 310 to transmit and receive a signal in a first frequency band is shown.

An electronic device (CPE) may include a first electronic device and a second electronic device, and the first electronic device may include a first communication circuit 310, and the second electronic device may include a second communication circuit 320.

According to an embodiment, a signal in a first frequency band may be transmitted and received through the first communication circuit 310, and a signal in a second frequency band may be transmitted and received through the second communication circuit 320. For example, the first frequency band may include a Wi-Fi band, an LTE band, sub-6 (less than 6GHz), or sub-7 (less than 7GHz). The second frequency band may include a millimeter wave band (e.g., 26GHz, 28GHz, 38GHz, or 60GHz) or a band exceeding 6GHz.

According to an embodiment of the disclosure, the second communication circuit 320 may be located outdoors because the second frequency band does not easily pass through the outer wall due to high path loss. As another example, the second communication circuit 320 may be located outdoors to provide a seamless wireless access, whereas the first communication circuit 310 may be located indoors to maintain seamless connections with the client devices 251, 252, 253, and 254. Since the first communication circuit 310 and the second communication circuit 320 have a physical distance therebetween, the two devices may be connected using a connection member 330. According to an embodiment, the connection member 330 may include a photoelectric composite cable, and the photoelectric composite cable may include a copper wire for transmitting power and an optical cable for transmitting an optical signal.

In operation 710, a signal may be received by the second communication circuit 320 supporting the second frequency band. For example, the second communication circuit 320 may include a second transceiver 321 and receive a signal in the second frequency band therethrough. For example, the second communication circuit 320 may perform communication with the second base station 220 through the second transceiver 321, and the second communication circuit 320 may receive a signal in the second frequency band transmitted from the second base station 220.

According to an embodiment, the second transceiver 321 may convert the signal in the second frequency band received from the second base station 220 into a digital signal, and the digital signal may be transmitted to the second fiber optic transceiver 323.

In operation 720, an optical signal may be transmitted to the first communication circuit for the first frequency band through the second fiber optic transceiver 323. According to an embodiment, the first communication circuit 310 and the second communication circuit 320 may be connected by the connection member 330 including a copper wire for transmitting power and an optical cable for transmitting an optical signal through the first fiber optic transceiver 313 and the second fiber optic transceiver 323.

In an embodiment, the second fiber optic transceiver 323 may convert a digital signal received from the second transceiver 321 into an optical signal and transmit the optical signal to the first communication circuit 310 through the connection member 330.

According to an embodiment, the second fiber optic transceiver 323 may be utilized to enable the second communication circuit 420 to communicate with the first communication circuit 410. For example, the second communication circuit 320 may transmit a signal received through the second transceiver 320 to the first communication circuit 310 through the connection member 330 using the second fiber optic transceiver 323. For example, the second fiber optic transceiver 323 may convert a digital signal received from the second transceiver 321 into an optical signal and transmit the converted optical signal to the first communication circuit 310 through the connection member 330.

According to an embodiment, the first communication circuit 310 may include a first fiber optic transceiver 313. In an embodiment, the first fiber optic transceiver 313 may receive an optical signal from the second communication circuit 320 through the connection member 330 and convert the optical signal into a digital signal.

In operation 730, the first communication circuit may transmit signals to the client devices 251, 252, 253, and 254. The first communication circuit 310 may include a 5G modem 413. The 5G modem 413 may be utilized to communicate with base stations. For example, the 5G modem 413 may be utilized to communicate with the first base station 210 that transmits and receives signals in the first frequency band. The 5G modem 413 may also be utilized to communicate with the second base station 220. For example, the 5G modem 413 may be utilized to convert a digital signal received from the first transceiver 311 into digital data in order to communicate with the first base station 210. As another example, the 5G modem 413 may be utilized to communicate with a 5G communication system using signals in the second frequency band. For example, the 5G modem 413 may be utilized to convert a digital signal received from the first fiber optic transceiver 313 into digital data in order to communicate with the second base station 220.

According to an embodiment, the first communication circuit 310 may include a Wi-Fi/hub 411. For example, the Wi-Fi/hub 411 may be utilized to provide information included in the signal in the second frequency band to the client devices 251, 252, 253, and 254 in the network environment 200. For example, the Wi-Fi/hub 411 may receive digital data including information including a signal in the second frequency band from the 5G modem 413. In addition, the Wi-Fi/hub 411 may provide the received digital data to the client devices 251, 252, 253, and 254 in the network environment 200.

According to embodiments of the disclosure, an electronic device may include a first communication circuit including a first transceiver 311 and a first fiber optic transceiver 313 for transmitting and receiving a signal in a first frequency band, and a second communication circuit including a second transceiver 321 and a second fiber optic transceiver 323 for transmitting and receiving a signal in a second frequency band, wherein the second communication circuit may receive information of the second frequency band and transmit the information to the first communication circuit through the second fiber optic transceiver 323, wherein the first communication circuit may receive the information through the first fiber optic transceiver 313 and transmit the information to a terminal, wherein the first fiber optic transceiver 313 may be connected to the second fiber optic transceiver 323, and wherein the lowest frequency in the second frequency band may be higher than the highest frequency in the first frequency band.

According to an embodiment, the first fiber optic transceiver 313 and the second fiber optic transceiver 323 may be connected by a photoelectric composite cable, and the second communication circuit may transmit the information to the first communication circuit through the photoelectric composite cable.

According to an embodiment, the photoelectric composite cable may include an optical cable, and the second communication circuit may transmit the information to the first communication circuit through the optical cable.

According to an embodiment, the first communication circuit may include a power supply device, and the first communication circuit may supply power to the second communication circuit through the power supply device.

According to an embodiment, the first fiber optic transceiver 313 and the second fiber optic transceiver 323 may be connected by a photoelectric composite cable, and the first communication circuit may supply power to the second communication circuit through the photoelectric composite cable.

According to an embodiment, the photoelectric composite cable may include a copper wire, and the first communication circuit may supply power to the second communication circuit through the copper wire.

According to an embodiment, the first fiber optic transceiver 313 and the second fiber optic transceiver 323 may include a digital-to-optical transceiver configured to convert a baseband signal into an optical signal.

According to an embodiment, the first fiber optic transceiver 313 and the second fiber optic transceiver 323 may include a photo diode configured to convert an optical signal into a baseband signal.

According to an embodiment, the second frequency band may include a millimeter wave band.

According to an embodiment, the first frequency band may include a sub-6 (less than 6GHz) band.

According to an embodiment of the disclosure, a method of an electronic device may include receiving, through a second transceiver 321, which is included in a second communication circuit and transmits and receives a signal in a second frequency band, information of the second frequency band, transmitting the information to a first communication circuit through a second fiber optic transceiver 323 included in the second communication circuit, receiving the information through a first fiber optic transceiver 313, which is included in the first communication circuit and transmits and receives a signal in a first frequency band, and transmitting the information to a terminal through the first communication circuit, wherein the first fiber optic transceiver 313 may be connected to the second fiber optic transceiver 323, and wherein the lowest frequency in the second frequency band may be higher than the highest frequency in the first frequency band.

According to an embodiment, the first fiber optic transceiver 313 and the second fiber optic transceiver 323 may be connected by a photoelectric composite cable, and the method may include transmitting the information by the second communication circuit to the first communication circuit through the photoelectric composite cable.

According to an embodiment, the photoelectric composite cable may include an optical cable, and the method may include transmitting the information by the second communication circuit to the first communication circuit through the optical cable.

According to an embodiment, the first communication circuit may include a power supply device, and the method may include supplying power by the first communication circuit to the second communication circuit through the power supply device.

According to an embodiment, the first fiber optic transceiver 313 and the second fiber optic transceiver 323 may be connected by a photoelectric composite cable, and the method may include supplying power by the first communication circuit to the second communication circuit through the photoelectric composite cable.

According to an embodiment, the photoelectric composite cable may include a copper wire, and the method may include supplying power by the first communication circuit to the second communication circuit through the copper wire.

According to an embodiment, the first fiber optic transceiver 313 and the second fiber optic transceiver 323 may include a digital-to-optical transceiver configured to convert a baseband signal into an optical signal.

According to an embodiment, the first fiber optic transceiver 313 and the second fiber optic transceiver 323 may include a photo diode configured to convert an optical signal into a baseband signal.

According to an embodiment, the second frequency band may include a millimeter wave band.

According to an embodiment, the first frequency band may include a sub-6 (less than 6GHz) band.

The methods according to embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims and equivalents thereof.

## Claims

1. An electronic device comprising:
a first communication circuit comprising a first transceiver and a first fiber optic transceiver for transmitting and receiving a signal in a first frequency band; and
a second communication circuit comprising a second transceiver and a second fiber optic transceiver for transmitting and receiving a signal in a second frequency band,
wherein the second communication circuit is configured to receive information included in the signal in the second frequency band and transmit the information to the first communication circuit through the second fiber optic transceiver,
wherein the first communication circuit is configured to receive the information through the first fiber optic transceiver and transmit the information to a terminal,
wherein the first fiber optic transceiver is connected to the second fiber optic transceiver, and
wherein the lowest frequency in the second frequency band is higher than the highest frequency in the first frequency band.

2. The electronic device of claim 1, wherein the first fiber optic transceiver and the second fiber optic transceiver are connected by a photoelectric composite cable, and
wherein the second communication circuit is configured to transmit the information to the first communication circuit through the photoelectric composite cable.

3. The electronic device of claim 2, wherein the photoelectric composite cable comprises an optical cable, and
wherein the second communication circuit is configured to transmit the information to the first communication circuit through the optical cable.

4. The electronic device of claim 1, wherein the first communication circuit comprises a power supply device, and
wherein the first communication circuit is configured to supply power to the second communication circuit through the power supply device.

5. The electronic device of claim 4, wherein the first fiber optic transceiver and the second fiber optic transceiver are connected by a photoelectric composite cable, and
wherein the first communication circuit is configured to supply power to the second communication circuit through the photoelectric composite cable.

6. The electronic device of claim 5, wherein the photoelectric composite cable comprises a copper wire, and
wherein the first communication circuit is configured to supply power to the second communication circuit through the copper wire.

7. The electronic device of claim 1, wherein the first fiber optic transceiver and the second fiber optic transceiver comprise a digital-to-optical transceiver configured to convert a baseband signal into an optical signal.

8. The electronic device of claim 1, wherein the first fiber optic transceiver and the second fiber optic transceiver comprise a photo diode configured to convert an optical signal into a baseband signal.

9. The electronic device of claim 1, wherein the second frequency band comprises a millimeter wave band.

10. The electronic device of claim 1, wherein the first frequency band comprises a sub-6 (less than 6GHz) band.

11. A method of an electronic device, the method comprising:
receiving, through a second transceiver, which is included in a second communication circuit and transmits and receives a signal in a second frequency band, information included in the signal in the second frequency band;
transmitting the information to a first communication circuit through a second fiber optic transceiver included in the second communication circuit;
receiving the information through a first fiber optic transceiver, which is included in the first communication circuit and transmits and receives a signal in a first frequency band; and
transmitting the information to a terminal through the first communication circuit,
wherein the first fiber optic transceiver is connected to the second fiber optic transceiver, and
wherein the lowest frequency in the second frequency band is higher than the highest frequency in the first frequency band.

12. The method of claim 11, wherein the first fiber optic transceiver and the second fiber optic transceiver are connected by a photoelectric composite cable, and
wherein the method comprises transmitting the information by the second communication circuit to the first communication circuit through the photoelectric composite cable.

13. The method of claim 12, wherein the photoelectric composite cable comprises an optical cable, and
wherein the method comprises transmitting the information by the second communication circuit to the first communication circuit through the optical cable.

14. The method of claim 11, wherein the first communication circuit comprises a power supply device, and
wherein the method comprises supplying power by the first communication circuit to the second communication circuit through the power supply device.

15. The method of claim 14, wherein the first fiber optic transceiver and the second fiber optic transceiver are connected by a photoelectric composite cable, and
wherein the method comprises supplying power by the first communication circuit to the second communication circuit through the photoelectric composite cable.
